# EUROPEAN PATENT SPECIFICATION

(11) **EP 3 644 653 B1**
(45) Date of publication and mention of the grant of the patent: **03.04.2024**
(21) Application number: 18819907.9
(22) Date of filing: 28.02.2018
(51) Int. Cl.: H04W 48/18, H04W 88/12, H04W 24/02

(54) **USER PLANE SELECTION METHOD, DEVICE AND SYSTEM IN RADIO ACCESS NETWORK**
BENUTZEREBENENAUSWAHLVERFAHREN, -VORRICHTUNG UND -SYSTEM IN EINEM FUNKZUGANGSNETZWERK
PROCÉDÉ, DISPOSITIF ET SYSTÈME DE SÉLECTION DE PLAN UTILISATEUR DANS UN RÉSEAU D'ACCÈS RADIO

(30) Priority: 23.06.2017 CN 201710484420
(43) Date of publication of application: 29.04.2020
(73) Proprietor: ZTE Corporation, Shenzhen, Guangdong 518057 (CN)
(72) Inventor: ZHENG, Tao, Shenzhen Guangdong 518057 (CN)
(74) Representative: Ipsilon
(86) International application number: PCT/CN2018/077595
(87) International publication number: WO 2018/233313

(56) References cited:
- EP-A1- 2 753 142
- EP-A1- 3 675 405
- EP-B1- 2 753 142
- WO-A1-2017/100556
- CN-A- 101 159 905
- CN-A- 106 162 730
- CN-A- 106 538 037
- "3rd Generation Partnership Project; Technical Specification Group Radio Access Network; Study on new radio access technology: Radio access architecture and interfaces (Release 14)", 3GPP STANDARD ; TECHNICAL REPORT ; 3GPP TR 38.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V14.0.0, 3 April 2017 (2017-04-03), pages 1-91, XP051298041, [retrieved on 2017-04-03]
- LG ELECTRONICS INC: "Specification aspects for RAN functional split", 3GPP DRAFT; R3-161837 SPECIFICATION ASPECTS FOR RAN FUNCTIONAL SPLIT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG3, no. Gothenburg, Sweden; 20160822 - 20160826 13 August 2016 (2016-08-13), XP051134906, Retrieved from the Internet: URL:http://www.3gpp.org/ftp/tsg_ran/WG3_Iu /TSGR3_93/Docs/ [retrieved on 2016-08-13]
- "3rd Generation Partnership Project; Technical Specification Group Radio Access Network; Study on New Radio Access Technology; Radio Access Architecture and Interfaces (Release 14)", , 6 March 2017 (2017-03-06), XP051224523, Retrieved from the Internet: URL:http://www.3gpp.org/ftp/TSG_RAN/WG3_Iu /TSGR3_AHGs/R3_AH_NR_1701/Docs/R3-170335.z ip

## Description

### Field

The disclosure relates to the technical field of radio communications, and particularly to a user plane selection method, device and system in a radio access network.

### Background

With the development of the mobile communication technologies, the user's requirements are diverse and varied, and the future user experience is the interweaving and integration of multi-terminal, multi-application and high-bandwidth. It is predicted that both the number and the service rate of the devices supported in the future will be 10 to 100 times higher than those of the current devices, while the end-to-end delays required by some reliable services with low time delays will be shortened to a fifth of the current level, so the network development needs the higher bandwidth, lower delay, higher reliability and stronger intelligent capability, but the existing radio communication technologies are difficult to meet the comprehensively-improved requirements of the future services.

In terms of 5G (5rd Generation) RAN (Radio Access Network) architecture, the 3GPP (3rd Generation Partnership Project) has passed the CU/DU (Central Unit/Distributed Unit) architecture solution, and the function division is performed based on the E-UTRA protocol stack.

At present, there are many possible division modes of the user plane protocol layer.

### Summary

The following is the overview of the subjects described in details herein. The overview is not intended to limit the protection scope of the claims. The invention is defined in the appended set of claims.

The disclosure provides a user plane selection method, device and system in a radio access network.

According to one aspect of the disclosure, a user plane selection method in a radio access network is provided, which is applicable to a central unit and includes: receiving, by the central unit, a service establishment request message sent by a user equipment, and obtaining a distributed unit to which the service establishment request message belongs; obtaining at least one user plane division mode supported by the distributed unit, and sending the at least one user plane division mode together with the service establishment request message to a core network; and establishing, by the central unit, a user plane in the central unit and the distributed unit according to a final user plane division mode selected by the core network.

According to another aspect of the disclosure, a user plane selection method in a radio access network is provided, which is applicable to a core network and includes: receiving, by the core network, a service establishment request message and at least one user plane division mode sent by a central unit; and selecting, by the core network, a final user plane division mode for a user equipment according to the at least one user plane division mode, and sending a service establishment message to the central unit.

According to yet another aspect of the disclosure, a user plane selection device in a radio access network is provided, which is applicable to a central unit and includes: a service request module configured to receive by the central unit a service establishment request message sent by a user equipment, and obtain a distributed unit to which the service establishment request message belongs; a division mode obtaining module configured to obtain at least one user plane division mode supported by the distributed unit, and send the at least one user plane division mode together with the service establishment request message to a core network; and a user plane establishing module configured to establish by the central unit a user plane in the central unit and the distributed unit according to a final user plane division mode selected by the core network.

According to yet another aspect of the disclosure, a user plane selection device in a radio access network is provided, which is applicable to a core network and includes: a receiving module configured to receive by the core network a service establishment request message and at least one user plane division mode sent by a central unit; and a division mode confirming module configured to select by the core network a final user plane division mode for a user equipment according to the at least one user plane division mode, and send a service establishment message to the central unit.

In an exemplary embodiment, when a distributed unit to which the service establishment request message belongs supports only one user plane division mode, the division mode confirming module includes: a receiving unit configured to receive by the core network the service establishment request message, and obtain the user plane division mode; a first confirming unit configured to confirm by the core network that the user plane division mode designated by the central unit is the final user plane division mode; a service bearing mode selecting unit configured to select a corresponding service bearing mode for the user equipment according to the final user plane division mode; and a service establishing unit configured to send by the core network the service establishment message to the central unit to require the central unit to establish service bearing for the user equipment in accordance with the corresponding service bearing mode.

According to yet another aspect of the disclosure, a user plane selection system in a radio access network is provided, which includes a memory, a processor and at least one application stored in the memory and configured to be executed by the processor, where the application is configured to perform the user plane selection method in the radio access network described above.

According to yet another aspect of the disclosure, a computer-readable storage medium is provided, which stores the computer executable instructions that implement any method described above when executed by a processor.

The embodiments of the disclosure provide a user plane selection method, device and system in a radio access network, where the method includes: the central unit receives a service establishment request message sent by a user equipment, and obtains a distributed unit to which the service establishment request message belongs; the central unit obtains the at least one user plane division mode supported by the distributed unit, and sends the at least one user plane division mode together with the service establishment request message to a core network; the core network selects a final user plane division mode for the user equipment according to the at least one user plane division mode, and sends a service establishment message to the central unit; the central unit establishes a user plane in the central unit and the distributed unit according to the final user plane division mode. Through the negotiation between the central unit and the core network, the appropriate user plane division mode is selected for the user equipment in the radio access network, which improves the service quality and meets the requirements of the 5G service on the delay, bandwidth and load.

Other aspects can be understood after reading and understanding the attached drawings and detailed description.

### Brief Description of the Drawings

Fig. 1 is a flow chart of a user plane selection method in a radio access network provided by a first embodiment of the disclosure.
Fig. 2 is an architecture diagram of the radio access network provided by the first embodiment of the disclosure.
Fig. 3 is a schematic diagram of the classification of the user plane division modes provided by the first embodiment of the disclosure.
Fig. 4 is a method flow chart of the step S20 in Fig. 1.
Fig. 5 is a flow chart of another user plane selection method in the radio access network provided by the first embodiment of the disclosure.
Fig. 6 is a method flow chart of the step S60 in Fig. 5.
Fig. 7 is a schematic diagram of a user plane selection method in the radio access network provided by the first embodiment of the disclosure.
Fig. 8 is a method flow chart of the step S60 in Fig. 5 provided by a second embodiment of the disclosure.
Fig. 9 is a schematic diagram of a user plane selection method in the radio access network, which is used for illustration purpose only and not forms a part of the present invention.
Fig. 10 is an exemplary structural block diagram of a user plane selection device in the radio access network provided by a third embodiment of the disclosure.
Fig. 11 is an exemplary structural block diagram of the division mode obtaining module in Fig. 10.
Fig. 12 is an exemplary structural block diagram of another user plane selection device in the radio access network provided by the third embodiment of the disclosure.
Fig. 13 is an exemplary structural block diagram of the division mode confirming module in Fig. 10.
Fig. 14 is an exemplary structural block diagram of the division mode confirming module in Fig. 10 provided by a fourth embodiment of the disclosure.

### Detailed Description of the Embodiments

The user plane protocol layers such as PDCP (Packet Data Convergence Protocol), RLC (Radio Link Control), High-MAC (Media Access Control) in the 3G RAN architecture are all located in the RNC (Radio Network Controller) similar to the CU, they have the fixed positions, lack the flexibility, and are clearly not suitable for many services. In the 4G RAN, all the user plane protocol layers are integrally located in the eNB (E-UTRAN NodeB), and the whole 4G network tends to be flatting, which certainly reduces the intermediate network elements and thus reduces the service access delay and service processing delay, but does not meet the complex service form envisioned in the 5G as well as the mobility requirements of the user equipments.

The disclosure will be further described below in details in combination with the drawings and embodiments. It should be understood that the specific embodiments described herein are only used to explain but not limit the disclosure.

### First Embodiment

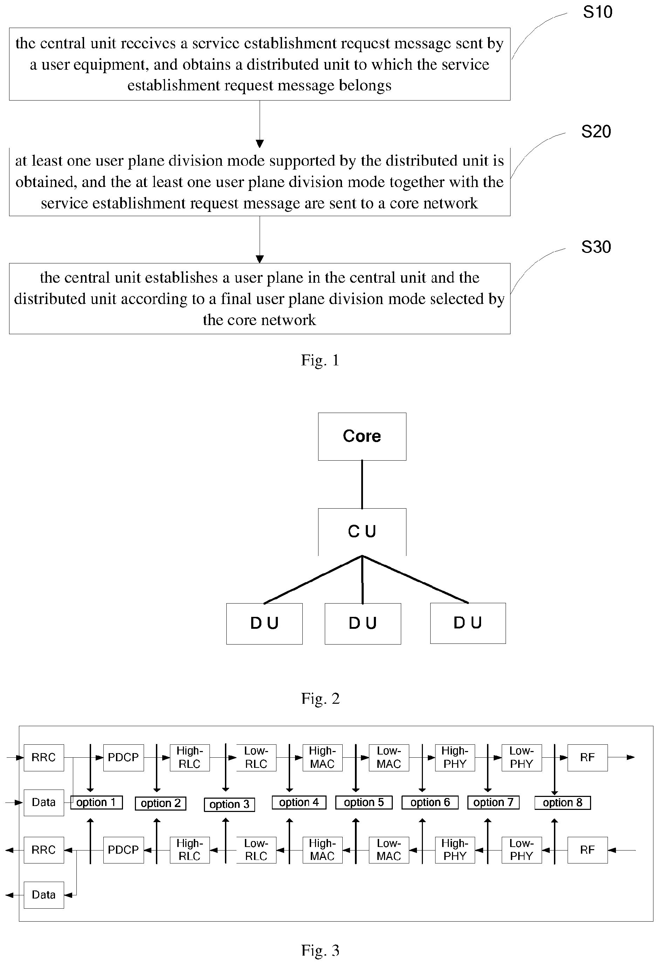

As shown in Fig. 1, an embodiment of the disclosure provides a user plane selection method in a radio access network, which is applicable to a central unit and includes the following steps S10 to S30.

In step S10, the central unit receives a service establishment request message sent by a user equipment, and obtains a distributed unit to which the service establishment request message belongs.

In step S20, at least one user plane division mode supported by the distributed unit is obtained, and the at least one user plane division mode together with the service establishment request message are sent to a core network.

In step S30, the central unit establishes a user plane in the central unit and the distributed unit according to a final user plane division mode selected by the core network.

In this embodiment, through the negotiation between the central unit and the core network, the appropriate user plane division mode is selected for the user equipment (UE) in the radio access network, which improves the service quality and meets the requirements of the 5G service on the delay, bandwidth and load.

In this embodiment, the architecture diagram of the CU/DU of the RAN is as shown in Fig. 2, where Core is the core network, CU is the central unit, i.e., Central Unit in the 5G architecture, and the interface between the Core and the CU is called Gn interface that mainly completes the transmissions of the signalling and data between the Core and the CU; DU is the distributed unit, i.e., Distributed Unit in the 5G architecture, and the interface between the CU and the DU is called Xn interface that mainly completes the transmissions of the signalling and data between the CU and the DU.

In this embodiment, as shown in Fig. 3, the user plane of the user equipment has eight user plane division modes between the CU and the DU, where RRC is the control signalling protocol layer of the air interface; PDCP is the data aggregation protocol layer; the High RLC and the Low RLC are divided among the RLC protocol layers, and there are two division modes: (1) the High RLC contains the ARQ (Automatic Repeat Request) function and reordering function, and the Low RLC contains other RLC functions; (2) the High RLC contains the RLC receiver functions and the Low RLC contains the RLC sender functions; the High MAC and the Low MAC are divided among the MAC protocol layers, where the High MAC contains the central scheduling function of the MAC and the Low MAC contains the MAC-layer functions with the strict time requirements; the High Phy and the Low Phy are divided among the Phy layers, and the functional division of these two parts are still under discussion; RF is the radio frequency function.

In Fig. 3, when the user plane division mode is the option 1, the UE's user plane is in the DU, the data is directly from the DU to the Core without passing the CU.

When the user plane division mode is the option 2, the PDCP of the UE's user plane is at the CU, and the RLC and under layers are all at the DU.

When the user plane division mode is the option 3, the PDCP and High RLC of the UE's user plane are at the CU, and the Low RLC, MAC and under layers are all at the DU.

When the user plane division mode is the option 4, the PDCP and RLC of the UE's user plane are at the CU, and the MAC and under layers are all at the DU.

When the user plane division mode is the option 5, the PDCP, RLC and High Mac of the UE's user plane are at the CU, and the Low Mac and under layers are all at the DU.

When the user plane division mode is the option 6, the PDCP, RLC and Mac of the UE's user plane are all at the CU, and the PHY and RF layers are at the DU.

When the user plane division mode is the option 7, the Low Phy and RF of the UE's user plane are at the DU, and the others are at the CU.

When the user plane division mode is the option 8, the RF of the UE's user plane is at the DU, and the others are at the CU.

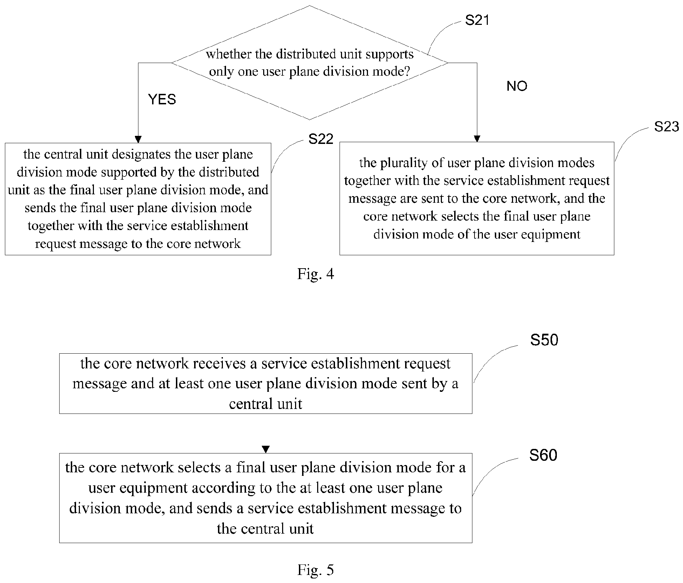

As shown in Fig. 4, in this embodiment, the step S20 includes the following steps S21 to S23.

In step S21, whether the distributed unit supports only one user plane division mode is judged.

If so, it proceeds to the step S22 in which the central unit designates the user plane division mode supported by the distributed unit as the final user plane division mode, and sends the final user plane division mode together with the service establishment request message to the core network.

If the distributed unit supports a plurality of user plane division modes, it proceeds to the step S23 in which the plurality of user plane division modes together with the service establishment request message are sent to the core network, and the core network selects the final user plane division mode of the user equipment.

In this embodiment, as can be seen from Fig. 3, the user plane of the user equipment has more user plane division modes between the CU and the DU. The user plane division mode(s) supported by the DU may be known according to the service establishment request message sent by the user equipment and the distributed unit to which it belongs, where the DU may support one or more modes, or even all the eight modes. It is necessary to select different processing strategies for different situations.

As shown in Fig. 5, a user plane selection method in a radio access network applicable to a core network includes the following steps S50 and S60.

In step S50, the core network receives a service establishment request message and at least one user plane division mode sent by a central unit.

In step S60, the core network selects a final user plane division mode for a user equipment according to the at least one user plane division mode, and sends a service establishment message to the central unit.

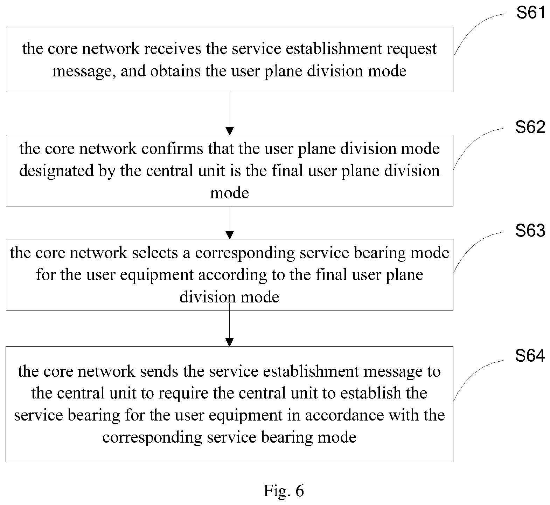

As shown in Fig. 6, in this embodiment, when the distributed unit to which the service establishment request message belongs supports only one user plane division mode, the step S60 includes the following steps S61 to S64.

In step S61, the core network receives the service establishment request message, and obtains the user plane division mode.

In step S62, the core network confirms that the user plane division mode designated by the central unit is the final user plane division mode.

In step S63, the core network selects a corresponding service bearing mode for the user equipment according to the final user plane division mode.

In step S64, the core network sends the service establishment message to the central unit to require the central unit to establish the service bearing for the user equipment in accordance with the corresponding service bearing mode.

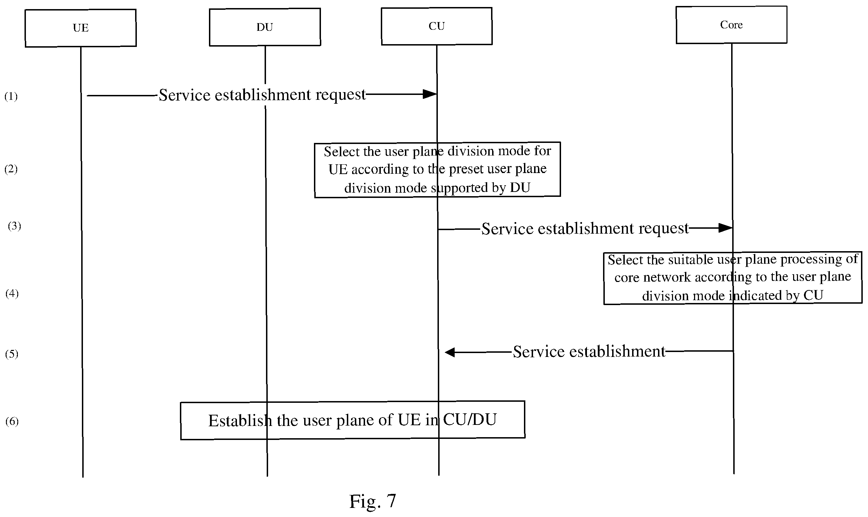

The user plane selection method in the radio access network described above may also be represented by the schematic diagram as shown in Fig. 7. In this embodiment, it is assumed that the user plane division mode supported by the DU is the option 2, then the CU selects the user plane division mode as the option 2 for the services of the UE; the CU sends the service establishment request message to the Core, where the message indicates that the user plane division mode is the option 2; the service establishment request message may be the INITIAL UE MESSAGE of the S1 interface or other message or the message of the Gn interface; the Core selects the suitable service bearing mode for the UE in the Core according to the received service establishment request message and the user plane division mode (option 2) indicated therein; the Core sends the service establishment message to the CU to require it to establish the service bearing for the UE; and the CU establishes the user plane in the CU and the DU for the UE in accordance with the user plane division mode (option 2) selected by the CU.

### Second Embodiment

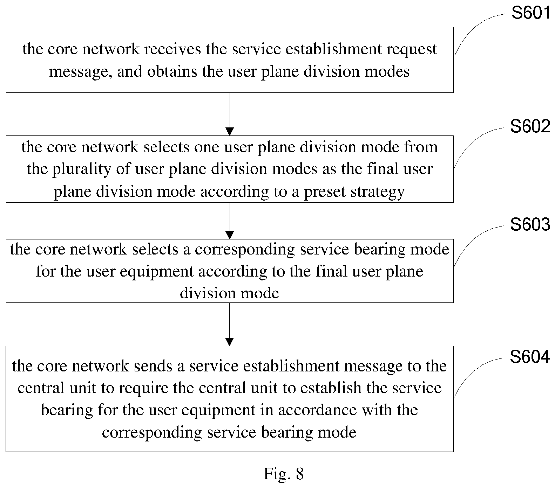

As shown in Fig. 8 and based on the first embodiment, in the embodiment of the disclosure, when the distributed unit to which the service establishment request message belongs supports a plurality of user plane division modes, the step S60 further includes the following steps S601 to S604.

In step S601, the core network receives the service establishment request message, and obtains the user plane division modes.

In step S602, the core network selects one user plane division mode from the plurality of user plane division modes as the final user plane division mode according to a preset strategy.

In step S603, the core network selects a corresponding service bearing mode for the user equipment according to the final user plane division mode.

In step S604, the core network sends a service establishment message to the central unit to require the central unit to establish the service bearing for the user equipment in accordance with the corresponding service bearing mode.

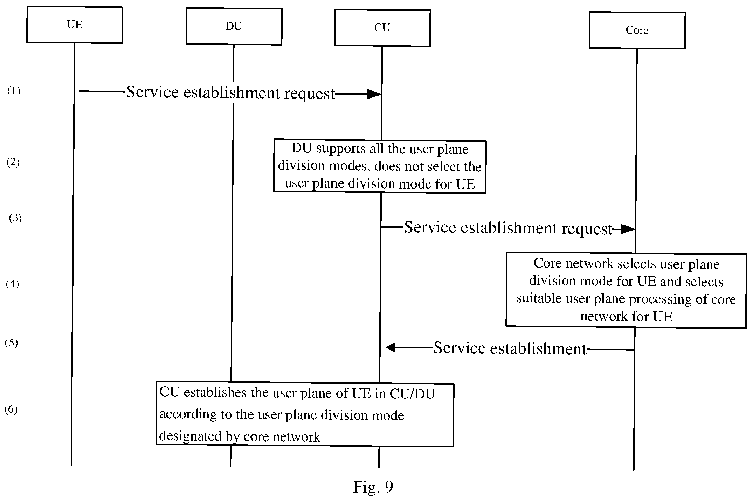

In an example, which is not as part of the present invention, a user plane selection method in the radio access network may be represented by the schematic diagram as shown in Fig. 9. In this example, it is assumed that the DU supports all the user plane division modes, then the CU does not select the user plane division mode for the service of the UE for the moment; the CU sends the service establishment request message to the Core without indicating the user plane division mode of the UE in the RAN; the Core receives the service establishment request message. Since the message does not indicate the user plane division mode in the RAN, the Core selects the user plane division mode in the RAN as the option 1 for the UE according to its own strategy, and selects the suitable service bearing for the UE in the Core; the Core sends the service establishment message to the CU to require it to establish the service bearing for the UE, where the message indicates that the user plane division mode of the UE in the RAN is the option 1; and the CU establishes the user plane in the CU and the DU for the UE in accordance with the user plane division mode (option 1) selected by the CU.

### Third Embodiment

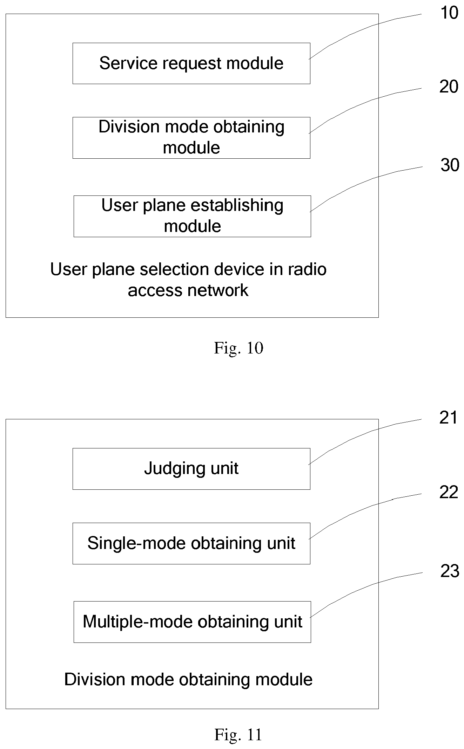

As shown in Fig. 10, in an embodiment of the disclosure, a user plane selection device in the radio access network applicable to the central unit includes: a service request module 10 configured to receive by the central unit a service establishment request message sent by a user equipment, and obtain a distributed unit to which the service establishment request message belongs; a division mode obtaining module 20 configured to obtain at least one user plane division mode supported by the distributed unit, and send the at least one user plane division mode together with the service establishment request message to a core network; and a user plane establishing module 30 configured to establish by the central unit a user plane in the central unit and the distributed unit according to a final user plane division mode selected by the core network.

In this embodiment, through the negotiation between the central unit and the core network, the appropriate user plane division mode is selected for the UE in the radio access network, which improves the service quality and meets the requirements of the 5G service on the delay, bandwidth and load.

In this embodiment, the architecture diagram of the CU/DU of the RAN is as shown in Fig. 2, where Core is the core network, CU is the central unit, i.e., Central Unit in the 5G architecture, and the interface between the Core and the CU is called Gn interface that mainly completes the transmissions of the signalling and data between the Core and the CU; DU is the distributed unit, i.e., Distributed Unit in the 5G architecture, and the interface between the CU and the DU is called Xn interface that mainly completes the transmissions of the signalling and data between the CU and the DU.

In this embodiment, as shown in Fig. 3, the user plane of the user equipment has eight user plane division modes between the CU and the DU, where RRC is the control signalling protocol layer of the air interface; PDCP is the data aggregation protocol layer; the High RLC and the Low RLC are divided among the RLC protocol layers, and there are two division modes: (1) the High RLC contains the ARQ (Automatic Repeat Request) function and reordering function, and the Low RLC contains other RLC functions; (2) the High RLC contains the RLC receiver functions and the Low RLC contains the RLC sender functions; the High MAC and the Low MAC are divided among the MAC protocol layers, where the High MAC contains the central scheduling function of the MAC and the Low MAC contains the MAC-layer functions with the strict time requirements; the High Phy and the Low Phy are divided among the Phy layers, and the functional division of these two parts are still under discussion; RF is the radio frequency function.

In Fig. 3, when the user plane division mode is the option 1, the UE's user plane is in the DU, the data is directly from the DU to the Core without passing the CU.

When the user plane division mode is the option 2, the PDCP of the UE's user plane is at the CU, and the RLC and under layers are all at the DU.

When the user plane division mode is the option 3, the PDCP and High RLC of the UE's user plane are at the CU, and the Low RLC, MAC and under layers are all at the DU.

When the user plane division mode is the option 4, the PDCP and RLC of the UE's user plane are at the CU, and the MAC and under layers are all at the DU.

When the user plane division mode is the option 5, the PDCP, RLC and High Mac of the UE's user plane are at the CU, and the Low Mac and under layers are all at the DU.

When the user plane division mode is the option 6, the PDCP, RLC and Mac of the UE's user plane are all at the CU, and the PHY and RF layers are at the DU.

When the user plane division mode is the option 7, the Low Phy and RF of the UE's user plane are at the DU, and the others are at the CU.

When the user plane division mode is the option 8, the RF of the UE's user plane is at the DU, and the others are at the CU.

As shown in Fig. 11, in this embodiment, the division mode obtaining module includes: a judging unit 21 configured to judge whether the distributed unit supports only one user plane division mode; a single-mode obtaining unit 22 configured to, when the distributed unit supports only one user plane division mode, designate by the central unit the user plane division mode supported by the distributed unit as the final user plane division mode, and send the final user plane division mode together with the service establishment request message to the core network; and a multiple-mode obtaining unit 23 configured to, when the distributed unit supports a plurality of user plane division modes, send the plurality of user plane division modes together with the service establishment request message to the core network, and select by the core network the final user plane division mode of the user equipment.

In this embodiment, as can be seen from Fig. 3, the user plane of the user equipment has more user plane division modes between the CU and the DU. The user plane division modes supported by the DU may be known according to the service establishment request message sent by the user equipment and the distributed unit to which it belongs, where the DU may support one or more modes, or even all the eight modes. It is necessary to select different processing strategies for different situations.

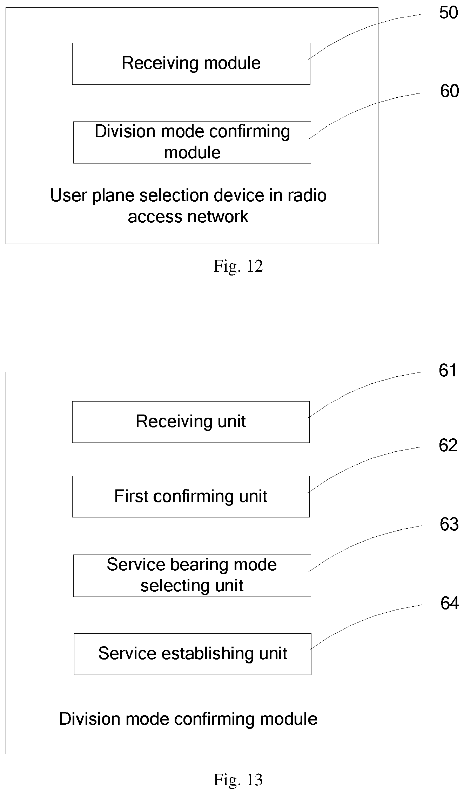

As shown in Fig. 12, a user plane selection device in the radio access network applicable to the core network includes: a receiving module 50 configured to receive by the core network a service establishment request message and at least one user plane division mode sent by a central unit; and a division mode confirming module 60 configured to select by the core network a final user plane division mode for a user equipment according to the at least one user plane division modes, and send a service establishment message to the central unit.

As shown in Fig. 13, in this embodiment, when the distributed unit to which the service establishment request message belongs supports only one user plane division mode, the division mode confirming module 60 includes: a receiving unit 61 configured to receive by the core network the service establishment request message, and obtain the user plane division mode; a first confirming unit 62 configured to confirm by the core network that the user plane division mode designated by the central unit is the final user plane division mode; a service bearing mode selecting unit 63 configured to select a corresponding service bearing mode for the user equipment according to the final user plane division mode; and a service establishing unit 64 configured to send by the core network the service establishment message to the central unit to require the central unit to establish the service bearing for the user equipment in accordance with the corresponding service bearing mode.

The workflow of the user plane selection device in the radio access network described above may also be represented by the schematic diagram as shown in Fig. 7. In this embodiment, it is assumed that the user plane division mode supported by the DU is the option 2, then the CU selects the user plane division mode as the option 2 for the services of the UE; the CU sends the service establishment request message to the Core, where the message indicates that the user plane division mode is the option 2; the service establishment request message may be the INITIAL UE MESSAGE of the S1 interface or other message or the message of the Gn interface; the Core selects the suitable service bearing mode for the UE in the Core according to the received service establishment request message and the user plane division mode (option 2) indicated therein; the Core sends the service establishment message to the CU to require it to establish the service bearing for the UE; and the CU establishes the user plane in the CU and the DU for the UE in accordance with the user plane division mode (option 2) selected by the CU.

### Fourth Embodiment

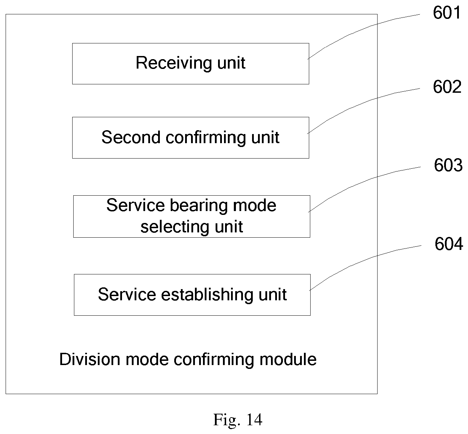

As shown in Fig. 14, in this embodiment, when the distributed unit to which the service establishment request message belongs supports a plurality of user plane division modes, the division mode confirming module 60 further includes: a receiving unit 601 configured to receive by the core network the service establishment request message, and obtain the user plane division modes; a second confirming unit 602 configured to select by the core network one user plane division mode from the plurality of user plane division modes as the final user plane division mode according to a preset strategy; a service bearing mode selecting unit 603 configured to select a corresponding service bearing mode for the user equipment according to the final user plane division mode; and a service establishing unit 604 configured to send by the core network a service establishment message to the central unit to require the central unit to establish the service bearing for the user equipment in accordance with the corresponding service bearing mode.

In an example, which is not as part of the present invention, a user plane selection method in the radio access network may also be represented by the schematic diagram as shown in Fig. 9. In this example, it is assumed that the DU supports all the user plane division modes, then the CU does not select the user plane division mode for the service of the UE for the moment; the CU sends the service establishment request message to the Core without indicating the user plane division mode of the UE in the RAN; the Core receives the service establishment request message. Since the message does not indicate the user plane division mode in the RAN, the Core selects the user plane division mode in the RAN as the option 1 for the UE according to its own strategy, and selects the suitable service bearing for the UE in the Core; the Core sends the service establishment message to the CU to require it to establish the service bearing for the UE, where the message indicates that the user plane division mode of the UE in the RAN is the option 1; and the CU establishes the user plane in the CU and the DU for the UE in accordance with the user plane division mode (option 1) selected by the CU.

A workflow of a user plane selection device in the radio access network may also be represented by the schematic diagram as shown in Fig. 9, which is used for illustration purpose only and not forms a part of the present invention. In this example, it is assumed that the DU supports all the user plane division modes, then the CU does no select the user plane division mode for the service of the UE for the moment; the CU sends the service establishment request message to the Core without indicating the user plane division mode of the UE in the RAN; the Core receives the service establishment request message. Since the message does not indicate the user plane division mode in the RAN, the Core selects the user plane division mode in the RAN as the option 1 for the UE according to its own strategy, and selects the suitable service bearing for the UE in the Core; the Core sends the service establishment message to the CU to require it to establish the service bearing for the UE, where the message indicates that the user plane division mode of the UE in the RAN is the option 1; and the CU establishes the user plane in the CU and the DU for the UE in accordance with the user plane division mode (option 1) selected by the CU.

### Fifth Embodiment

In an embodiment of the disclosure, a user plane selection system in the radio access network includes a memory, a processor and at least one application stored in the memory and configured to be executed by the processor, where the application is configured to perform the user plane selection methods in the radio access network described in the first and second embodiments.

The above-mentioned device embodiments and method embodiments belong to the similar concept, the specific implementation process of the device embodiments refer to the method embodiments, and the technical features in the method embodiments are applicable in the device embodiments, which will not be repeated here.

An embodiment of the disclosure provides a computer-readable storage medium storing the computer executable instructions that implement the method described above when executed by a processor.

It may be understood by those ordinary skilled in the art that the functional modules/units in all or some of the steps, systems, and devices in the methods disclosed above may be implemented as the software, firmware, hardware and the suitable combination thereof. In the hardware embodiments, the division among the functional modules/units mentioned in the above description does not necessarily correspond to the division of the physical components; for example, one physical component may have multiple functions, or one function or step may be performed jointly by several physical components. Some or all components may be implemented as the software executed by the processor such as digital signal processor or microprocessor, or implemented as the hardware, or implemented as the integrated circuit such as application specific integrated circuit. Such softwares may be distributed over the computer-readable media which may include the computer storage medium (or non-transient medium) and the communication medium (or transient medium). As can be well known by those ordinary skilled in the art, the term "computer storage medium" includes the volatile, non-volatile, removable and unremovable media implemented in any method or technique for storing the information (such as computer-readable instructions, data structures, program modules, or other data). The computer storage medium includes but not limited to RAM, ROM, EEPROM, flash or other memory technology, CD-ROM, Digital Versatile Disc (DVD) or other optical disc storage, magnetic box, magnetic tape, magnetic disk storage or other magnetic storage device, or any other medium which can be used to store the desired information and can be accessed by a computer. Furthermore, it is well known by those ordinary skilled in the art that the communication medium generally contains the computer-readable instructions, data structures, program modules, or other data in the modulated data signal such as carrier or other transmission mechanism, and may include any information delivery medium.

The above illustrates the exemplary embodiments of the disclosure by reference to the drawings but not limit the right scope of the disclosure which is solely defined by the appended claims. ,

## Claims

1. A user plane selection method, which is performed by a central unit of a radio access network, comprising:
receiving, by the central unit, a service establishment request message sent by a user equipment, and obtaining a distributed unit via which the service establishment request message is received (S10);
obtaining at least one user plane division mode supported by the distributed unit, and sending the at least one user plane division mode together with the service establishment request message to a core network (S20);
receiving a service establishment message sent from the core network, wherein the service establishment message is configured to require the central unit to establish a service bearing for the user equipment in accordance with a corresponding service bearing mode, and the corresponding service bearing mode is selectable, by the core network, according to a final user plane division mode selectable by the core network from the at least one user plane division mode; and
establishing, by the central unit, a user plane in the central unit and the distributed unit according to the final user plane division mode selectable by the core network (S30).

2. The user plane selection method according to claim 1, wherein the obtaining at least one user plane division mode supported by the distributed unit, and sending the at least one user plane division mode together with the service establishment request message to a core network (S20) comprises:
judging whether the distributed unit supports only one user plane division mode (S21), if so, designating, by the central unit, the user plane division mode supported by the distributed unit as the final user plane division mode, and sending the final user plane division mode together with the service establishment request message to the core network (S22);
if the distributed unit supports a plurality of user plane division modes, sending the plurality of user plane division modes together with the service establishment request message to the core network (S23), wherein the final user plane division mode of the user equipment, which is selectable by the core network, is from the plurality of user plane division modes.

3. A user plane selection method for a radio access network, which is performed by a core network, comprising:
receiving, by the core network, a service establishment request message together with at least one user plane division mode sent by a central unit of the radio access network (S50); and
selecting, by the core network, a final user plane division mode for a user equipment according to the at least one user plane division mode, and sending a service establishment message to the central unit (S60), wherein the service establishment message is configured to require the central unit to establish a service bearing for the user equipment in accordance with a corresponding service bearing mode, and the corresponding service bearing mode is selected, by the core network, according to the final user plane division mode selected by the core network from the at least one user plane division mode.

4. The user plane selection method for the radio access network according to claim 3, wherein when a distributed unit via which the service establishment request message is received by the central unit from the user equipment supports only one user plane division mode, the selecting, by the core network, a final user plane division mode for a user equipment according to the at least one user plane division mode, and sending a service establishment message to the central unit (S60) comprises:
receiving, by the core network, the service establishment request message, and obtaining the user plane division mode (S61);
confirming, by the core network, that the user plane division mode designated by the central unit is the final user plane division mode (S62);
selecting, by the core network, a corresponding service bearing mode for the user equipment according to the final user plane division mode (S63); and
sending, by the core network, the service establishment message to the central unit to require the central unit to establish service bearing for the user equipment in accordance with the corresponding service bearing mode (S64).

5. The user plane selection method for the radio access network according to claim 3, wherein when a distributed unit via which the service establishment request message is received by the central unit from the user equipment supports a plurality of user plane division modes, selecting, by the core network, a final user plane division mode for a user equipment according to the at least one user plane division mode, and sending a service establishment message to the central unit (S60) further comprises:
receiving, by the core network, the service establishment request message, and obtaining the plurality of user plane division modes (S601);
selecting, by the core network, one user plane division mode from the plurality of user plane division modes as the final user plane division mode according to a preset strategy (S602);
selecting, by the core network, a corresponding service bearing mode for the user equipment according to the final user plane division mode (S603); and
sending, by the core network, the service establishment message to the central unit to require the central unit to establish service bearing for the user equipment in accordance with the corresponding service bearing mode (S604).

6. A user plane selection device, which is comprised in a central unit of a radio access network, comprising:
a service request module (10) configured to receive by the central unit a service establishment request message sent by a user equipment, and obtain a distributed unit via which the service establishment request message is received;
a division mode obtaining module (20) configured to obtain at least one user plane division mode supported by the distributed unit, and send the at least one user plane division mode together with the service establishment request message to a core network;
a receiving module configured to receive a service establishment message sent from the core network, wherein the service establishment message is configured to require the central unit to establish a service bearing for the user equipment in accordance with a corresponding service bearing mode, and the corresponding service bearing mode is selectable, by the core network, according to a final user plane division mode selectable by the core network from the at least one user plane division mode; and
a user plane establishing module (30) configured to establish by the central unit a user plane in the central unit and the distributed unit according to the final user plane division mode selectable by the core network.

7. The user plane selection device according to claim 6, wherein the division mode obtaining module (20) comprises:
a judging unit (21) configured to judge whether the distributed unit supports only one user plane division mode;
a single-mode obtaining unit (22) configured to, when the distributed unit supports only one user plane division mode, designate by the central unit the user plane division mode supported by the distributed unit as the final user plane division mode, and send the final user plane division mode together with the service establishment request message to the core network; and
a multiple-mode obtaining unit (23) configured to, when the distributed unit supports a plurality of user plane division mode, send the plurality of user plane division modes together with the service establishment request message to the core network, wherein the final user plane division mode of the user equipment, which is selectable by the core network, is from the plurality of user plane division modes.

8. A user plane selection device for a radio access network, which is comprised in a core network, comprising:
a receiving module (50) configured to receive by the core network a service establishment request message together with at least one user plane division mode sent by a central unit of the radio access network; and
a division mode confirming module (60) configured to select by the core network a final user plane division mode for a user equipment according to the at least one user plane division mode, and send a service establishment message to the central unit, wherein the service establishment message is configured to require the central unit to establish a service bearing for the user equipment in accordance with a corresponding service bearing mode, and the corresponding service bearing mode is selected, by the core network, according to the final user plane division mode selected by the core network from the at least one user plane division mode.

9. The user plane selection device for the radio access network according to claim 8, wherein when a distributed unit via which the service establishment request message is received by the central unit from the user equipment supports only one user plane division mode, the division mode confirming module (60) comprises:
a receiving unit (61) configured to receive by the core network the service establishment request message, and obtain the user plane division mode;
a first confirming unit (62) configured to confirm by the core network that the user plane division mode designated by the central unit is the final user plane division mode;
a service bearing mode selecting unit (63) configured to select a corresponding service bearing mode for the user equipment according to the final user plane division mode; and
a service establishing unit (64) configured to send by the core network the service establishment message to the central unit to require the central unit to establish service bearing for the user equipment in accordance with the corresponding service bearing mode.

10. The user plane selection device for the radio access network according to claim 8, wherein when a distributed unit via which the service establishment request message is received by the central unit from the user equipment supports a plurality of user plane division modes, the division mode confirming module (60) further comprises:
a receiving unit (601) configured to receive by the core network the service establishment request message, and obtain the plurality of user plane division modes;
a second confirming unit (602) configured to select by the core network one user plane division mode from the plurality of user plane division modes as the final user plane division mode according to a preset strategy;
a service bearing mode selecting unit (603) configured to select a corresponding service bearing mode for the user equipment according to the final user plane division mode; and
a service establishing unit (604) configured to send by the core network the service establishment message to the central unit to require the central unit to establish service bearing for the user equipment in accordance with the corresponding service bearing mode.

11. A user plane selection system in a radio access network, comprising a first memory, a first processor and at least one first application stored in the first memory and configured to be executed by the first processor, wherein the first memory, the first processor and the at least one first application are comprised in a central unit and the at least one first application is configured to perform the method of claim 1 or 2.

12. A user plane selection system for a radio access network, comprising a second memory, a second processor and at least one second application stored in the second memory and configured to be executed by the second processor, wherein the second memory, the second processor and the at least one second application are comprised in a core network and the at least one second application is configured to perform the method any one of claims 3 to 5.

13. A computer-readable storage medium comprised in a central unit and storing computer executable instructions, which implement the method of any one of claims 1-2 when executed by a processor comprised in the central unit.

14. A computer-readable storage medium comprised in a core network and storing computer executable instructions, which implement the method of any one of claims 3-5 when executed by a processor comprised in the core network.

15. A user plane selection method, comprising:
receiving, by a central unit, a service establishment request message sent by a user equipment, and obtaining a distributed unit via which the service establishment request message is received
obtaining, by the central unit, at least one user plane division mode supported by the distributed unit, and sending the at least one user plane division mode together with the service establishment request message to a core network;
receiving, by the core network, the service establishment request message together with the at least one user plane division mode sent by the central unit
selecting, by the core network, a final user plane division mode for the user equipment according to the at least one user plane division mode, and sending a service establishment message to the central unit, wherein the service establishment message is configured to require the central unit to establish a service bearing for the user equipment in accordance with a corresponding service bearing mode, and the corresponding service bearing mode is selected, by the core network, according to the final user plane division mode selected by the core network from the at least one user plane division mode;
receiving, by the central unit, the service establishment message sent from the core network; and
establishing, by the central unit, a user plane in the central unit and the distributed unit according to the final user plane division mode.

## Patentansprüche

1. Benutzerebenenauswahlverfahren, das von einer Zentraleinheit eines Funkzugangsnetzwerks durchgeführt wird, umfassend:
Empfangen, durch die Zentraleinheit, einer Diensteinrichtungsanforderungsnachricht, die von einer Benutzerausrüstung gesendet wird, und Erlangen einer verteilten Einheit, über die die Diensteinrichtungsanforderungsnachricht empfangen wird (S10);
Erlangen mindestens eines Benutzerebenenteilungsmodus, der von der verteilten Einheit unterstützt wird, und Senden des mindestens einen Benutzerebenenteilungsmodus zusammen mit der Diensteinrichtungsanforderungsnachricht an ein Kernnetzwerk (S20);
Empfangen einer Diensteinrichtungsnachricht, die von dem Kernnetzwerk gesendet wird, wobei die Diensteinrichtungsnachricht konfiguriert ist, um die Zentraleinheit aufzufordern, einen Dienstträger für die Benutzerausrüstung gemäß einem entsprechenden Dienstträgermodus einzurichten, und der entsprechende Dienstträgermodus durch das Kernnetzwerk gemäß einem endgültigen Benutzerebenenteilungsmodus auswählbar ist, der durch das Kernnetzwerk aus dem mindestens einen Benutzerebenenteilungsmodus auswählbar ist; und
Einrichten, durch die Zentraleinheit, einer Benutzerebene in der Zentraleinheit und der verteilten Einheit gemäß dem endgültigen Benutzerebenenteilungsmodus, der durch das Kernnetzwerk auswählbar ist (S30).

2. Benutzerebenenauswahlverfahren nach Anspruch 1, wobei das Erlangen mindestens eines Benutzerebenenteilungsmodus, der von der verteilten Einheit unterstützt wird, und ein Senden des mindestens einen Benutzerebenenteilungsmodus zusammen mit der Diensteinrichtungsanforderungsnachricht an ein Kernnetzwerk (S20) Folgendes umfasst:
Beurteilen, ob die verteilte Einheit nur einen Benutzerebenenteilungsmodus unterstützt (S21), wenn ja, Bestimmen, durch die Zentraleinheit, des Benutzerebenenteilungsmodus, der von der verteilten Einheit unterstützt wird, als den endgültigen Benutzerebenenteilungsmodus und Senden des endgültigen Benutzerebenenteilungsmodus zusammen mit der Diensteinrichtungsanforderungsnachricht an das Kernnetzwerk (S22);
wenn die verteilte Einheit eine Vielzahl von Benutzerebenenteilungsmodi unterstützt, Senden der Vielzahl von Benutzerebenenteilungsmodi zusammen mit der Diensteinrichtungsanforderungsnachricht an das Kernnetzwerk (S23), wobei der endgültige Benutzerebenenteilungsmodus der Benutzerausrüstung, der durch das Kernnetzwerk auswählbar ist, aus der Vielzahl von Benutzerebenenteilungsmodi ist.

3. Benutzerebenenauswahlverfahren für ein Funkzugangsnetz, das von einem Kernnetzwerk durchgeführt wird, umfassend:
Empfangen, durch das Kernnetzwerk, einer Diensteinrichtungsanforderungsnachricht zusammen mit mindestens einem Benutzerebenenteilungsmodus, der von einer Zentraleinheit des Funkzugangsnetzwerks (S50) gesendet wird; und
Auswählen, durch das Kernnetzwerk, eines endgültigen Benutzerebenenteilungsmodus für eine Benutzerausrüstung gemäß dem mindestens einen Benutzerebenenteilungsmodus, und Senden einer Diensteinrichtungsnachricht an die Zentraleinheit (S60), wobei die Diensteinrichtungsnachricht konfiguriert ist, um die Zentraleinheit aufzufordern, einen Dienstträger für die Benutzerausrüstung gemäß einem entsprechenden Dienstträgermodus einzurichten, und der entsprechende Dienstträgermodus durch das Kernnetzwerk gemäß dem endgültigen Benutzerebenenteilungsmodus ausgewählt wird, der von dem Kernnetzwerk aus dem mindestens einen Benutzerebenenteilungsmodus ausgewählt wird.

4. Benutzerebenenauswahlverfahren für das Funkzugangsnetzwerk nach Anspruch 3, wobei, wenn eine verteilte Einheit, über die die Diensteinrichtungsanforderungsnachricht durch die Zentraleinheit von der Benutzerausrüstung empfangen wird, nur einen Benutzerebenenteilungsmodus unterstützt, das Auswählen, durch das Kernnetzwerk, eines endgültigen Benutzerebenenteilungsmodus für eine Benutzerausrüstung gemäß dem mindestens einen Benutzerebenenteilungsmodus und das Senden einer Diensteinrichtungsnachricht an die Zentraleinheit (S60) Folgendes umfasst:
Empfangen, durch das Kernnetzwerk, der Diensteinrichtungsanforderungsnachricht und Erlangen des Benutzerebenenteilungsmodus (S61);
Bestätigen, durch das Kernnetzwerk, dass der von der Zentraleinheit bezeichnete Benutzerebenenteilungsmodus der endgültige Benutzerebenenteilungsmodus ist (S62);
Auswählen, durch das Kernnetzwerk, eines entsprechenden Dienstträgermodus für die Benutzerausrüstung gemäß dem endgültigen Benutzerebenenteilungsmodus (S63); und
Senden, durch das Kernnetzwerk, der Diensteinrichtungsnachricht an die Zentraleinheit, um die Zentraleinheit aufzufordern, einen Dienstträger für die Benutzerausrüstung gemäß dem entsprechenden Dienstträgermodus einzurichten (S64).

5. Benutzerebenenauswahlverfahren für das Funkzugangsnetzwerk nach Anspruch 3, wobei, wenn eine verteilte Einheit, über die die Diensteinrichtungsanforderungsnachricht durch die Zentraleinheit von der Benutzerausrüstung empfangen wird, eine Vielzahl von Benutzerebenenteilungsmodi unterstützt, ein Auswählen, durch das Kernnetzwerk, eines endgültigen Benutzerebenenteilungsmodus für eine Benutzerausrüstung gemäß dem mindestens einen Benutzerebenenteilungsmodus und ein Senden einer Diensteinrichtungsnachricht an die Zentraleinheit (S60) ferner Folgendes umfasst:
Empfangen, durch das Kernnetzwerk, der Diensteinrichtungsanforderungsnachricht und Erlangen der Vielzahl von Benutzerebenenteilungsmodi (S601);
Auswählen, durch das Kernnetzwerk, eines Benutzerebenenteilungsmodus aus der Vielzahl der Benutzerebenenteilungsmodi als endgültiger Benutzerebenenteilungsmodus gemäß einer voreingestellten Strategie (S602);
Auswählen, durch das Kernnetzwerk, eines entsprechenden Dienstträgermodus für die Benutzerausrüstung gemäß dem endgültigen Benutzerebenenteilungsmodus (S603); und
Senden, durch das Kernnetzwerk, der Diensteinrichtungsnachricht an die Zentraleinheit, um die Zentraleinheit aufzufordern, einen Dienstträger für die Benutzerausrüstung gemäß dem entsprechenden Dienstträgermodus einzurichten (S604).

6. Benutzerebenenauswahlvorrichtung, die in einer Zentraleinheit eines Funkzugangsnetzwerks enthalten ist, umfassend:
ein Dienstanforderungsmodul (10), das konfiguriert ist, um durch die Zentraleinheit eine Diensteinrichtungsanforderungsnachricht zu empfangen, die von einer Benutzerausrüstung gesendet wird, und eine verteilte Einheit zu erlangen, über die die Diensteinrichtungsanforderungsnachricht empfangen wird;
ein Teilungsmoduserlangungsmodul (20), das konfiguriert ist, um mindestens einen Benutzerebenenteilungsmodus zu erlangen, der von der verteilten Einheit unterstützt wird und den mindestens einen Benutzerebenenteilungsmodus zusammen mit der Diensteinrichtungsanforderungsnachricht an ein Kernnetzwerk zu senden;
ein Empfangsmodul, das konfiguriert ist, um eine vom Kernnetzwerk gesendete Diensteinrichtungsnachricht zu empfangen, wobei die Diensteinrichtungsnachricht konfiguriert ist, um die Zentraleinheit aufzufordern, einen Dienstträger für die Benutzerausrüstung gemäß einem entsprechenden Dienstträgermodus einzurichten, und der entsprechende Dienstträgermodus durch das Kernnetzwerk gemäß einem endgültigen Benutzerebenenteilungsmodus auswählbar ist, der durch das Kernnetzwerk aus dem mindestens einen Benutzerebenenteilungsmodus auswählbar ist; und
ein Benutzerebeneneinrichtungsmodul (30), das konfiguriert ist, um durch die Zentraleinheit eine Benutzerebene in der Zentraleinheit und der verteilten Einheit gemäß dem endgültigen Benutzerebenenteilungsmodus einzurichten, der durch das Kernnetzwerk auswählbar ist.

7. Benutzerebenenauswahlvorrichtung nach Anspruch 6, wobei das Teilungsmoduserlangungsmodul (20) Folgendes umfasst:
eine Beurteilungseinheit (21), die konfiguriert ist, um zu beurteilen, ob die verteilte Einheit nur einen Benutzerebenenteilungsmodus unterstützt;
eine Einzelmoduserlangungseinheit (22), die konfiguriert ist, um, wenn die verteilte Einheit nur einen Benutzerebenenteilungsmodus unterstützt, durch die Zentraleinheit den von der verteilten Einheit unterstützten Benutzerebenenteilungsmodus als den endgültigen Benutzerebenenteilungsmodus zu bestimmen und den endgültigen Benutzerebenenteilungsmodus zusammen mit der Diensteinrichtungsanforderungsnachricht an das Kernnetzwerk zu senden; und
eine Mehrfachmoduserlangungseinheit (23), die konfiguriert ist, um, wenn die verteilte Einheit eine Vielzahl von Benutzerebenenteilungsmodi unterstützt, die Vielzahl von Benutzerebenenteilungsmodi zusammen mit der Diensteinrichtungsanforderungsnachricht an das Kernnetzwerk zu senden, wobei der endgültige Benutzerebenenteilungsmodus der Benutzerausrüstung, der durch das Kernnetzwerk auswählbar ist, aus der Vielzahl von Benutzerebenenteilungsmodi ist.

8. Benutzerebenenauswahlvorrichtung für ein Funkzugangsnetz, das in einem Kernnetzwerk enthalten ist, umfassend:
ein Empfangsmodul (50), das konfiguriert ist, um durch das Kernnetzwerk eine Diensteinrichtungsanforderungsnachricht zusammen mit mindestens einem Benutzerebenenteilungsmodus zu empfangen, der von einer Zentraleinheit des Funkzugangsnetzwerks gesendet wird; und
ein Teilungsmodusbestätigungsmodul (60), das konfiguriert ist, um durch das Kernnetzwerk einen endgültigen Benutzerebenenteilungsmodus für ein Benutzerausrüstung gemäß dem mindestens einen Benutzerebenenteilungsmodus auszuwählen und eine Diensteinrichtungsnachricht an die Zentraleinheit zu senden, wobei die Diensteinrichtungsnachricht konfiguriert ist, um die Zentraleinheit aufzufordern, einen Dienstträger für die Benutzerausrüstung gemäß einem entsprechenden Dienstträgermodus einzurichten, und der entsprechende Dienstträgermodus durch das Kernnetz gemäß dem endgültigen Benutzerebenenteilungsmodus ausgewählt wird, der von dem Kernnetzwerk aus dem mindestens einen Benutzerebenenteilungsmodus ausgewählt wird;

9. Benutzerebenenauswahlvorrichtung für das Funkzugangsnetzwerk nach Anspruch 8, wobei, wenn eine verteilte Einheit, über die die Diensteinrichtungsanforderungsnachricht von der Zentraleinheit von der Benutzerausrüstung empfangen wird, nur einen Benutzerebenenteilungsmodus unterstützt, das Teilungsmodusbestätigungsmodul (60) Folgendes umfasst:
eine Empfangseinheit (61), die konfiguriert ist, um durch das Kernnetzwerk die Diensteinrichtungsanforderungsnachricht zu empfangen und den Benutzerebenenteilungsmodus zu erlangen;
eine erste Bestätigungseinheit (62), die konfiguriert ist, um durch das Kernnetzwerk zu bestätigen, dass der von der Zentraleinheit bezeichnete Benutzerebenenteilungsmodus der endgültige Benutzerebenenteilungsmodus ist;
eine Dienstträgermodusauswahleinheit (63), die konfiguriert ist, um einen entsprechenden Dienstträgermodus für die Benutzerausrüstung gemäß dem endgültigen Benutzerebenenteilungsmodus auszuwählen; und
eine Diensteinrichtungseinheit (64), die konfiguriert ist, um durch das Kernnetzwerk die Dienstherstellungsnachricht an die Zentraleinheit zu senden, um die Zentraleinheit aufzufordern, einen Dienstträger für die Benutzerausrüstung gemäß dem entsprechenden Dienstträgermodus einzurichten.

10. Benutzerebenenauswahlvorrichtung für das Funkzugangsnetzwerk nach Anspruch 8, wobei, wenn eine verteilte Einheit, über die die Diensteinrichtungsanforderungsnachricht von der Zentraleinheit von der Benutzerausrüstung empfangen wird, eine Vielzahl von Benutzerebenenteilungsmodi unterstützt, das Teilungsmodusbestätigungsmodul (60) ferner Folgendes umfasst:
eine Empfangseinheit (601), die konfiguriert ist, um die Diensteinrichtungsanforderungsnachricht durch das Kernnetzwerk zu empfangen und die Vielzahl von Benutzerebenenteilungsmodi zu erlangen;
eine zweite Bestätigungseinheit (602), die konfiguriert ist, um durch das Kernnetzwerk einen Benutzerebenenteilungsmodus aus der Vielzahl von Benutzerebenenteilungsmodi als den endgültigen Benutzerebenenteilungsmodus gemäß einer voreingestellten Strategie auszuwählen;
eine Dienstträgermodusauswahleinheit (603), die konfiguriert ist, um einen entsprechenden Dienstträgermodus für die Benutzerausrüstung gemäß dem endgültigen Benutzerebenenteilungsmodus auszuwählen; und
eine Diensteinrichtungseinheit (604), die konfiguriert ist, um durch das Kernnetzwerk die Dienstherstellungsnachricht an die Zentraleinheit zu senden, um die Zentraleinheit aufzufordern, einen Dienstträger für die Benutzerausrüstung gemäß dem entsprechenden Dienstträgermodus einzurichten.

11. Benutzerebenenauswahlsystem in einem Funkzugangsnetz, umfassend einen schnellen Speicher, einen ersten Prozessor und mindestens eine erste Anwendung, die in dem ersten Speicher gespeichert und konfiguriert ist, um von dem ersten Prozessor ausgeführt zu werden, wobei der erste Speicher, der erste Prozessor und die mindestens eine erste Anwendung in einer Zentraleinheit enthalten sind und die mindestens eine erste Anwendung konfiguriert ist, um das Verfahren nach Anspruch 1 oder 2 durchzuführen.

12. Benutzerebenenauswahlsystem für ein Funkzugangsnetz, umfassend einen zweiten Speicher, einen zweiten Prozessor und mindestens eine zweite Anwendung, die in dem zweiten Speicher gespeichert und konfiguriert ist, um von dem zweiten Prozessor ausgeführt zu werden, wobei der zweite Speicher, der zweite Prozessor und die mindestens eine zweite Anwendung in einem Kernnetzwerk enthalten sind und die mindestens eine zweite Anwendung konfiguriert ist, um das Verfahren nach einem der Ansprüche 3 bis 5 durchzuführen.

13. Computerlesbares Speichermedium, das in einer Zentraleinheit enthalten ist und computerausführbare Anweisungen speichert, die das Verfahren nach einem der Ansprüche 1-2 implementieren, wenn sie von einem in der Zentraleinheit enthaltenen Prozessor ausgeführt werden.

14. Computerlesbares Speichermedium, das in einem Kernnetzwerk enthalten ist und computerausführbare Anweisungen speichert, die das Verfahren nach einem der Ansprüche 3-5 implementieren, wenn sie von einem Prozessor ausgeführt werden, der in dem Kernnetzwerk enthalten ist.

15. Benutzerebenenauswahlverfahren, umfassend:
Empfangen, durch eine Zentraleinheit, einer Diensteinrichtungsanforderungsnachricht, die von einem Benutzergerät gesendet wird, und Erlangen einer verteilten Einheit, über die die Diensteinrichtungsanforderungsnachricht empfangen wird;
Erlangen, durch eine Zentraleinheit, mindestens eines Benutzerebenenteilungsmodus, der von der verteilten Einheit unterstützt wird, und Senden des mindestens einen Benutzerebenenteilungsmodus zusammen mit der Diensteinrichtungsanforderungsnachricht an ein Kernnetzwerk;
Empfangen, durch das Kernnetzwerk, der Diensteinrichtungsanforderungsnachricht zusammen mit dem mindestens einen Benutzerebenenteilungsmodus, der von der Zentraleinheit gesendet wird
Auswählen, durch das Kernnetz, eines endgültigen Benutzerebenenteilungsmodus für die Benutzerausrüstung gemäß dem mindestens einen Benutzerebenenteilungsmodus, und Senden einer Diensteinrichtungsnachricht an die Zentraleinheit, wobei die Diensteinrichtungsnachricht konfiguriert ist, um die Zentraleinheit aufzufordern, einen Dienstträger für die Benutzerausrüstung gemäß einem entsprechenden Dienstträgermodus einzurichten, und der entsprechende Dienstträgermodus durch das Kernnetz gemäß dem endgültigen Benutzerebenenteilungsmodus ausgewählt wird, der von dem Kernnetzwerk aus dem mindestens einen Benutzerebenenteilungsmodus ausgewählt wird;
Empfangen, durch die Zentraleinheit, der von dem Kernnetzwerk gesendeten Diensteinrichtungsnachricht;
und
Einrichten, durch die Zentraleinheit, einer Benutzerebene in der Zentraleinheit und der verteilten Einheit gemäß dem endgültigen Benutzerebenenteilungsmodus.

## Revendications

1. Procédé de sélection de plan utilisateur, qui est mis en oeuvre par une unité centrale d'un réseau d'accès radio, le procédé comprenant les étapes ci-dessous consistant à :
recevoir, par le biais de l'unité centrale, un message de demande d'établissement de service envoyé par un équipement d'utilisateur, et obtenir une unité distribuée par l'intermédiaire de laquelle le message de demande d'établissement de service est reçu (S10) ;
obtenir au moins un mode de division de plan utilisateur pris en charge par l'unité distribuée, et envoyer ledit au moins un mode de division de plan utilisateur conjointement avec le message de demande d'établissement de service, à un réseau central (S20) ;
recevoir un message d'établissement de service envoyé à partir du réseau central, dans lequel le message d'établissement de service est configuré de manière à demander à l'unité centrale d'établir une porteuse de service pour l'équipement d'utilisateur conformément à un mode de porteuse de service correspondant, et le mode de porteuse de service correspondant peut être sélectionné, par le réseau central, selon un mode de division de plan utilisateur final sélectionnable, par le réseau central, à partir dudit au moins un mode de division de plan utilisateur ; et
établir, par le biais de l'unité centrale, un plan utilisateur, dans l'unité centrale et l'unité distribuée, selon le mode de division de plan utilisateur final sélectionnable par le réseau central (S30).

2. Procédé de sélection de plan utilisateur selon la revendication 1, dans lequel l'étape d'obtention d'au moins un mode de division de plan utilisateur pris en charge par l'unité distribuée, et l'étape d'envoi dudit au moins un mode de division de plan utilisateur, conjointement avec le message de demande d'établissement de service, à un réseau central (S20), comprennent les étapes ci-dessous consistant à :
juger si l'unité distribuée ne prend en charge qu'un seul mode de division de plan utilisateur (S21), et dans l'affirmative, désigner, par le biais de l'unité centrale, le mode de division de plan utilisateur pris en charge par l'unité distribuée, comme étant le mode de division de plan utilisateur final, et envoyer le mode de division de plan utilisateur final conjointement avec le message de demande d'établissement de service, au réseau central (S22) ;
si l'unité distribuée prend en charge une pluralité de modes de division de plan utilisateur, envoyer la pluralité de modes de division de plan utilisateur, conjointement avec le message de demande d'établissement de service, au réseau central (S23), dans lequel le mode de division de plan utilisateur final de l'équipement d'utilisateur, qui est sélectionnable par le réseau central, fait partie de la pluralité de modes de division de plan utilisateur.

3. Procédé de sélection de plan utilisateur pour un réseau d'accès radio, qui est mis en oeuvre par un réseau central, le procédé comprenant les étapes ci-dessous consistant à :
recevoir, par le biais du réseau central, un message de demande d'établissement de service, conjointement avec au moins un mode de division de plan utilisateur envoyé par une unité centrale du réseau d'accès radio (S50) ; et
sélectionner, par le biais du réseau central, un mode de division de plan utilisateur final pour un équipement d'utilisateur selon ledit au moins un mode de division de plan utilisateur, et envoyer un message d'établissement de service à l'unité centrale (S60), dans lequel le message d'établissement de service est configuré de manière à demander à l'unité centrale d'établir une porteuse de service pour l'équipement d'utilisateur, conformément à un mode de porteuse de service correspondant, et le mode de porteuse de service correspondant est sélectionné, par le réseau central, selon le mode de division de plan utilisateur final sélectionné par le réseau central à partir dudit au moins un mode de division de plan utilisateur.

4. Procédé de sélection de plan utilisateur pour le réseau d'accès radio selon la revendication 3, dans lequel, lorsqu'une unité distribuée, par l'intermédiaire de laquelle le message de demande d'établissement de service est reçu par l'unité centrale en provenance de l'équipement d'utilisateur, ne prend en charge qu'un seul mode de division de plan utilisateur, l'étape de sélection, par le biais du réseau central, d'un mode de division de plan utilisateur final pour un équipement d'utilisateur selon ledit au moins un mode de division de plan utilisateur, et l'étape d'envoi d'un message d'établissement de service à l'unité centrale (S60), comprennent les étapes ci-dessous consistant à :
recevoir, par le biais du réseau central, le message de demande d'établissement de service, et obtenir le mode de division de plan utilisateur (S61) ;
confirmer, par le biais du réseau central, que le mode de division de plan utilisateur désigné par l'unité centrale est le mode de division de plan utilisateur final (S62) ;
sélectionner, par le biais du réseau central, un mode de porteuse de service correspondant pour l'équipement d'utilisateur selon le mode de division de plan utilisateur final (S63) ; et
envoyer, par le biais du réseau central, le message d'établissement de service, à l'unité centrale, en vue de demander à l'unité centrale d'établir une porteuse de service pour l'équipement d'utilisateur conformément au mode de porteuse de service correspondant (S64).

5. Procédé de sélection de plan utilisateur pour le réseau d'accès radio selon la revendication 3, dans lequel, lorsqu'une unité distribuée, par l'intermédiaire de laquelle le message de demande d'établissement de service est reçu par l'unité centrale en provenance de l'équipement d'utilisateur, prend en charge une pluralité de modes de division de plan utilisateur, l'étape de sélection, par le biais du réseau central, d'un mode de division de plan utilisateur final pour un équipement d'utilisateur conformément audit au moins un mode de division de plan utilisateur, et l'étape d'envoi d'un message d'établissement de service, à l'unité centrale (S60), comprennent en outre les étapes ci-dessous consistant à :
recevoir, par le biais du réseau central, le message de demande d'établissement de service, et obtenir la pluralité de modes de division de plan utilisateur (S601) ;
sélectionner, par le biais du réseau central, un mode de division de plan utilisateur parmi la pluralité de modes de division de plan utilisateur, en tant que le mode de division de plan utilisateur final, conformément à une stratégie prédéfinie (S602) ;
sélectionner, par le biais du réseau central, un mode de porteuse de service correspondant pour l'équipement d'utilisateur, selon le mode de division de plan utilisateur final (S603) ; et
envoyer, par le biais du réseau central, le message d'établissement de service, à l'unité centrale, en vue de demander à l'unité centrale d'établir une porteuse de service pour l'équipement d'utilisateur, conformément au mode de porteuse de service correspondant (S604).

6. Dispositif de sélection de plan utilisateur, qui est compris dans une unité centrale d'un réseau d'accès radio, comprenant :
un module de demande de service (10) configuré de manière à recevoir, par le biais de l'unité centrale, un message de demande d'établissement de service envoyé par un équipement d'utilisateur, et à obtenir une unité distribuée par l'intermédiaire de laquelle le message de demande d'établissement de service est reçu ;
un module d'obtention de mode de division (20) configuré de manière à obtenir au moins un mode de division de plan utilisateur pris en charge par l'unité distribuée, et à envoyer ledit au moins mode de division de plan utilisateur conjointement avec le message de demande d'établissement de service, à un réseau central ;
un module de réception configuré de manière à recevoir un message d'établissement de service envoyé à partir du réseau central, dans lequel le message d'établissement de service est configuré de manière à demander, à l'unité centrale, d'établir une porteuse de service pour l'équipement d'utilisateur, conformément à un mode de porteuse de service correspondant, et le mode de porteuse de service correspondant est sélectionnable, par le réseau central, selon un mode de division de plan utilisateur final sélectionnable par le réseau central à partir dudit au moins un mode de division de plan utilisateur ; et
un module d'établissement de plan utilisateur (30) configuré de manière à établir, par le biais de l'unité centrale, un plan utilisateur dans l'unité centrale et dans l'unité distribuée, selon le mode de division de plan utilisateur final sélectionnable par le réseau central.

7. Dispositif de sélection de plan utilisateur selon la revendication 6, dans lequel le module d'obtention de mode de division (20) comprend :
une unité de jugement (21) configurée de manière à juger si l'unité distribuée ne prend en charge qu'un seul mode de division de plan utilisateur ;
une unité d'obtention de mode unique (22) configurée de manière à, lorsque l'unité distribuée ne prend en charge qu'un seul mode de division de plan utilisateur, désigner, par le biais de l'unité centrale, le mode de division de plan utilisateur pris en charge par l'unité distribuée, comme étant le mode de division de plan utilisateur final, et envoyer le mode de division de plan utilisateur final, conjointement avec le message de demande d'établissement de service, au réseau central ; et
une unité d'obtention de modes multiples (23) configurée de manière à, lorsque l'unité distribuée prend en charge une pluralité de modes de division de plan utilisateur, envoyer la pluralité de modes de division de plan utilisateur, conjointement avec le message de demande d'établissement de service, au réseau central, dans lequel le mode de division de plan utilisateur final de l'équipement d'utilisateur, qui est sélectionnable par le réseau central, fait partie de la pluralité de modes de division de plan utilisateur.

8. Dispositif de sélection de plan utilisateur pour un réseau d'accès radio, qui est compris dans un réseau central, comprenant :
un module de réception (50) configuré de manière à recevoir, par le biais du réseau central, un message de demande d'établissement de service, conjointement avec au moins un mode de division de plan utilisateur envoyé par une unité centrale du réseau d'accès radio ; et
un module de confirmation de mode de division (60) configuré de manière à sélectionner, par le biais du réseau central, un mode de division de plan utilisateur final pour un équipement d'utilisateur, selon ledit au moins un mode de division de plan utilisateur, et à envoyer un message d'établissement de service à l'unité centrale, dans lequel le message d'établissement de service est configuré de manière à demander, à l'unité centrale, d'établir une porteuse de service pour l'équipement d'utilisateur, conformément à un mode de porteuse de service correspondant, et le mode de porteuse de service correspondant est sélectionné, par le réseau central, selon le mode de division de plan utilisateur final sélectionné par le réseau central, à partir d'au moins un mode de division de plan utilisateur.

9. Dispositif de sélection de plan utilisateur pour le réseau d'accès radio selon la revendication 8, dans lequel, lorsqu'une unité distribuée, par l'intermédiaire de laquelle le message de demande d'établissement de service est reçu par l'unité centrale en provenance de l'équipement d'utilisateur, ne prend en charge qu'un seul mode de division de plan utilisateur, le module de confirmation de mode de division (60) comprend :
une unité de réception (61) configurée de manière à recevoir, par le biais du réseau central, le message de demande d'établissement de service, et à obtenir le mode de division de plan utilisateur ;
une première unité de confirmation (62) configurée de manière à confirmer, par le biais du réseau central, que le mode de division de plan utilisateur, désigné par l'unité centrale, est le mode de division de plan utilisateur final ;
une unité de sélection de mode de porteuse de service (63) configurée de manière à sélectionner un mode de porteuse de service correspondant pour l'équipement d'utilisateur, selon le mode de division de plan utilisateur final ; et
une unité d'établissement de service (64) configurée de manière à envoyer, par le biais du réseau central, le message d'établissement de service, à l'unité centrale, en vue de demander à l'unité centrale d'établir une porteuse de service, pour l'équipement d'utilisateur, conformément au mode de porteuse de service correspondant.

10. Dispositif de sélection de plan utilisateur pour le réseau d'accès radio selon la revendication 8, dans lequel, lorsqu'une unité distribuée, par l'intermédiaire de laquelle le message de demande d'établissement de service est reçu par l'unité centrale en provenance de l'équipement d'utilisateur, prend en charge une pluralité de modes de division de plan utilisateur, le module de confirmation de mode de division (60) comprend en outre :
une unité de réception (601) configurée de manière à recevoir, par le biais du réseau central, le message de demande d'établissement de service, et à obtenir la pluralité de modes de division de plan utilisateur ;
une deuxième unité de confirmation (602) configurée de manière à sélectionner, par le biais du réseau central, un mode de division de plan utilisateur, parmi la pluralité de modes de division de plan utilisateur, en tant que le mode de division de plan utilisateur final, conformément à une stratégie prédéfinie ;
une unité de sélection de mode de porteuse de service (603) configurée de manière à sélectionner un mode de porteuse de service correspondant, pour l'équipement d'utilisateur, selon le mode de division de plan utilisateur final ; et
une unité d'établissement de service (604) configurée de manière à envoyer, par le biais du réseau central, le message d'établissement de service, à l'unité centrale, en vue de demander, à l'unité centrale, d'établir une porteuse de service pour l'équipement d'utilisateur, conformément au mode de porteuse de service correspondant.

11. Système de sélection de plan utilisateur dans un réseau d'accès radio, comprenant une première mémoire, un premier processeur et au moins une première application stockée dans la première mémoire et configurée de manière à être exécutée par le premier processeur, dans lequel la première mémoire, le premier processeur et ladite au moins une première application sont compris dans une unité centrale et ladite au moins une première application est configurée de manière à mettre en oeuvre le procédé selon la revendication 1 ou 2.

12. Système de sélection de plan utilisateur pour un réseau d'accès radio, comprenant une deuxième mémoire, un deuxième processeur, et au moins une deuxième application stockée dans la deuxième mémoire et configurée de manière à être exécutée par le deuxième processeur, dans lequel la deuxième mémoire, le deuxième processeur et ladite au moins une deuxième application sont compris dans un réseau central et ladite au moins une deuxième application est configurée de manière à exécuter le procédé selon l'une quelconque des revendications 3 à 5.

13. Support de stockage lisible par ordinateur compris dans une unité centrale et stockant des instructions exécutables par ordinateur, qui mettent en oeuvre le procédé selon l'une quelconque des revendications 1 à 2, lorsqu'elles sont exécutées par un processeur compris dans l'unité centrale.

14. Support de stockage lisible par ordinateur compris dans un réseau central et stockant des instructions exécutables par ordinateur, qui mettent en oeuvre le procédé selon l'une quelconque des revendications 3 à 5, lorsqu'elles sont exécutées par un processeur compris dans le réseau central.

15. Procédé de sélection de plan utilisateur, comprenant les étapes ci-dessous consistant à :
recevoir, par le biais d'une unité centrale, un message de demande d'établissement de service envoyé par un équipement d'utilisateur, et obtenir une unité distribuée par l'intermédiaire de laquelle le message de demande d'établissement de service est reçu ;
obtenir, par le biais de l'unité centrale, au moins un mode de division de plan utilisateur pris en charge par l'unité distribuée, et envoyer ledit au moins un mode de division de plan utilisateur, conjointement avec le message de demande d'établissement de service, à un réseau central ;
recevoir, par le biais du réseau central, le message de demande d'établissement de service, conjointement avec ledit au moins un mode de division de plan utilisateur envoyé par l'unité centrale ;
sélectionner, par le biais du réseau central, un mode de division de plan utilisateur final pour l'équipement d'utilisateur, selon ledit au moins un mode de division de plan utilisateur, et envoyer un message d'établissement de service, à l'unité centrale, dans lequel le message d'établissement de service est configuré de manière à demander, à l'unité centrale, d'établir une porteuse de service pour l'équipement d'utilisateur, conformément à un mode de porteuse de service correspondant, et dans lequel le mode de porteuse de service correspondant est sélectionné, par le réseau central, selon le mode de division de plan utilisateur final sélectionné par le réseau central, à partir dudit au moins un mode de division de plan utilisateur ;
recevoir, par le biais de l'unité centrale, le message d'établissement de service envoyé à partir du réseau central ; et
établir, par le biais de l'unité centrale, un plan utilisateur, dans l'unité centrale et dans l'unité distribuée, selon le mode de division de plan utilisateur final.
